# EUROPEAN PATENT SPECIFICATION

(11) **EP 1 326 392 B1**
(45) Date of publication and mention of the grant of the patent: **14.11.2007**
(21) Application number: 01403388.0
(22) Date of filing: 28.12.2001
(51) Int. Cl.: H04L 29/06, H04L 29/12

(54) **Data flow between a data network and a mobile node**
Datenfluss zwischen einem Datennetzwerk und einem mobilen Endgerät
Flux de données entre un réseau de données et un terminal mobile

(43) Date of publication of application: 09.07.2003
(73) Proprietor: MOTOROLA, INC., Schaumburg, IL 60196 (US)
(72) Inventor: Janneteau, Christophe, 78390 Bois d'Arcy (FR); Lach, Hong-Yon, 94220 Charenton le Pont (FR)
(74) Representative: Cross, Rupert Edward Blount

(56) References cited:
- WO-A-00/42755
- WO-A-00/48363
- NARTEN, NORDMARK, SIMPSON: "RFC 2461: Neighbor Discovery for IP Version 6" REQUEST FOR COMMENTS, December 1998 (1998-12), XP002198179

## Description

### Field of the Invention

This invention relates to telecommunication systems in which data flows between mobile nodes, for example personal data assistants with wireless communication capability, and a data network, for example the Internet.

### Background of the Invention

The Internet is becoming more and more popular, and users increasingly wish to access the Internet whilst mobile. Different types of mobile nodes (i.e. mobile communication units) may be employed for this purpose, for example a mobile telephone or a personal data assistant with wireless communication capability.

Increasingly, mobile users are accessing the Internet via different types of fixed or wireless access networks, for example a cellular radio communication network, such as a Universal Mobile Telecommunication System (UMTS) network, a HiperLAN or IEEE 802.11b local area network, a Bluetooth local communication system, or fixed accesses such as Ethernet, and so on. The data route between the mobile node and the Internet further comprises an Internet protocol subnet (IP subnet), such that the route is as follows: mobile node - access network - IP subnet - Internet (and reverse order for the data route from the Internet to the mobile node).

It is currently possible to seamlessly handover accessing of the Internet from one access network to another, for example by using a protocol known as Mobile-IP. However, this involves the routing of the data flow being changed such that it is necessary for the data to be routed through a different IP subnet for the new access network compared to the IP subnet through which the data flow is routed for the original access network.

However, it is possible that an Internet Service Provider (ISP), or a corporate network, provides access to the same IP subnet through several access networks. In such a case, Mobile-IP cannot be used.

It is also known that some wireless LAN technologies, like IEEE 802.11b or HiperLAN, implement link level mobility mechanisms. However, such mechanisms just allow a host to maintain its communications when moving within the same wireless LAN (i.e. same technology), accessing the network through the same interface. They do not offer any support of mobility across different access networks.

It is also known to have a host connected to the same IP subnet via multiple active network interfaces sharing the same IP address. However, this is in itself problematic, in that such a situation disrupts the address resolution mechanism and leads generally to an unstable binding between the host's IP address and its link-level address to be used.

When receiving a binding request (e.g. an Address Resolution Protocol (ARP) request for the IPv4 version of the IP protocol) from host #1 asking for the link-level address of host #2, each active network interface of host #2 will send a binding reply (e.g. ARP reply for IPv4) to host #1 mapping its link-level address to the IP address of host #2. Upon reception of these consecutive binding replies, host #1 will perform consecutive updates of its cache. The final entry stored in the cache of host #1 will then depend on the order of reception of the binding replies.

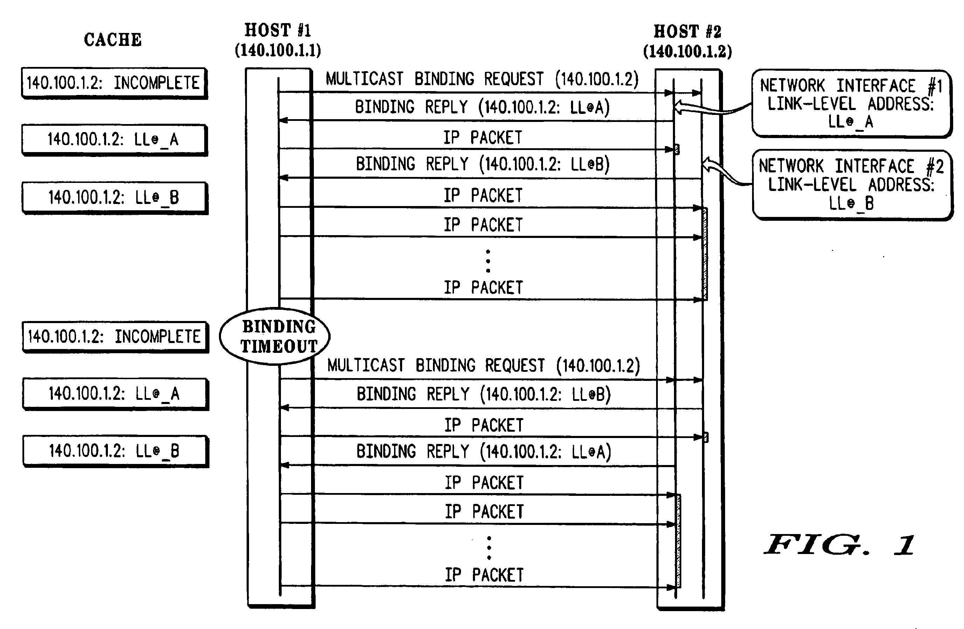

Such a situation results in transient entries in the cache until reception of the last binding reply, and several binding requests may result in different final entries in the cache depending on the order of arrival of the replies. As a consequence, IP packets sent by host #1 to host #2 may reach host #2 through any of its network interfaces (depending on the binding in the cache of the sender at the time of the sending) instead of using only the one that should be used. This unstable behaviour, illustrated in FIG. 1, represents a problem that is not desired and should preferably be avoided.

A need therefore arises for a different mechanism that will support the handover of a user's communication between access networks within the same IP subnet, preferably one that will not substantially suffer from the problem outlined in the preceding paragraph.

PCT patent application no. WO 00/48363 discloses a method for using information contained in a gratuitous address resolution protocol (ARP) message generated by a network host to manage the registration records that are maintained in a network host and utilised by that network host to support the mobility requirements of a mobile terminal.

### Statement of Invention

In accordance with a first aspect of the present invention, there is provided a method of re-routing data flow from a subnet of a data network to a mobile node, as claimed in claim 1.

In accordance with a second aspect of the present invention, there is provided a method of re-routing duplex data flow between a subnet of a data network and a mobile node, as claimed in claim 2.

In accordance with a third aspect of the present invention, there is provided a storage medium storing processor-implementable instructions, as claimed in claim 13.

In accordance with a fourth aspect of the present invention, there is provided a mobile node as claimed in claim 14.

In accordance with a fifth aspect of the present invention, there is provided a communication system, as claimed in claim 15.

Further aspects of the present invention are as claimed in the dependent claims.

### Brief Description of the Drawings

Exemplary embodiments of the present invention will now be described, with reference to the accompanying drawings, in which:
FIG. 1 shows disruption of an address resolution mechanism;
FIG. 2 schematically illustrates a communication system in which embodiments of the invention may be implemented;
FIG. 3 shows process steps of a generalised embodiment that may be applied with different types of NAP and in different IP contexts;
FIG. 4a shows one example of a re-routing process; and
FIG. 4b shows another example of a re-routing process.

### Description of Preferred Embodiments

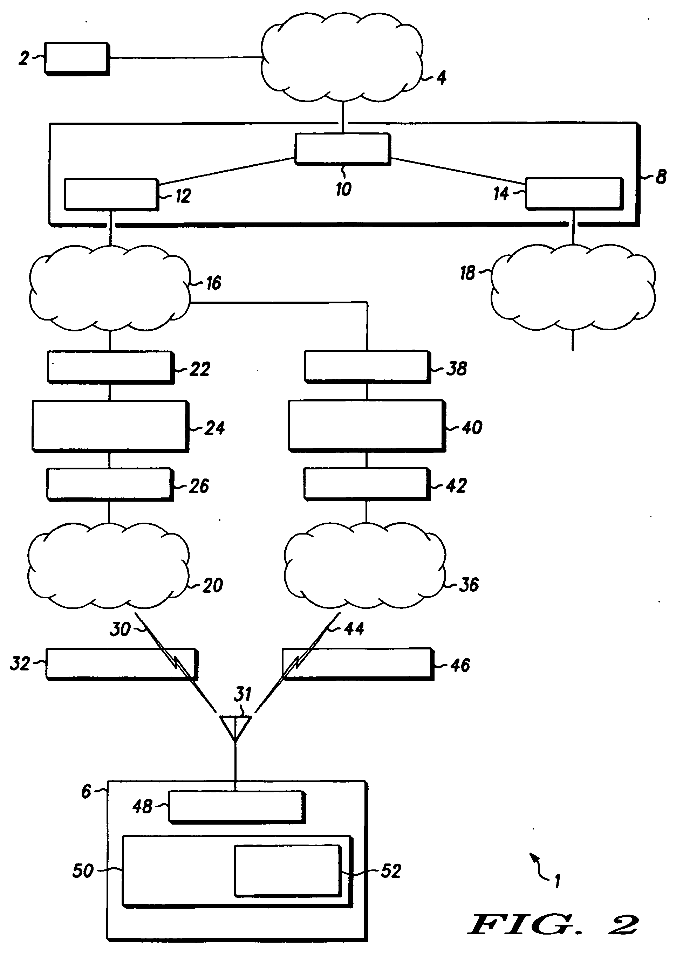

FIG. 2 schematically illustrates a communication system 1 in which embodiments of the invention may be implemented. The communication system 1 provides a duplex data flow route between an application server 2 (which may for example also be termed a correspondent host) linked to the Internet 4 and a mobile node 6, which in this embodiment is a personal data assistant with wireless communication capability, but in other embodiments may be other types of mobile communication units, for example a mobile telephone.

The mobile node 6 receives service via an Internet service provider (ISP), which provides an ISP backbone 8, of which, for clarity, only three routers 10, 12 and 14 are shown by way of example in FIG. 2. Router 10 is coupled to the Internet 4, and also to the other routers 12 and 14.

Router 12 is coupled to a first subnet 16. Router 14 is coupled to a second subnet 18. In this embodiment the subnets 16, 18 are IP subnets.

The current situation shown in FIG. 2 is that the duplex data flow between the application server 2/ Internet 4 and the mobile node 6 is currently routed through a first access network 20. In more detail, the first subnet 16 is coupled to a first interface 22 of a first network access point (NAP) 24. A second interface 26 of the first NAP 24 is coupled to the first access network 20. The first access network 20 is coupled by means of a radio link 30 to an antenna 31 of the mobile node 6. Communication over the radio link 30 is implemented using inter-alia a mobile node link level interface 32.

FIG. 2 further shows a second access network 36 through which the duplex data flow will instead be routed, as will be described in more detail below. In more detail, the first subnet 16 is coupled to a first interface 38 of a second NAP 40. A second interface 42 of the second NAP 40 is coupled to the second access network 36. The second access network 36 will, after handover, be coupled by means of a radio link 44 to the antenna 31 of the mobile node 6. Communication over the radio link 44 will be implemented using, inter-alia, a mobile node link level interface 46.

Moreover, instead of such coupling being "after handover", the mobile node interface 46 may also be coupled with the second access network 36 even before handover. In that case, even if link-layer communication on the second access may be feasible, IP-level traffic is however routed through the first access network.

In this embodiment, the same antenna 31 is used for connection with both the first access network 20 and the second access network 36. This may, for example, be by use of Software defined Radio technology. However, in other embodiments, the mobile node 6 may comprise separate antennas for each separate connection. Furthermore, in yet further embodiments, either one or both of the connections between the mobile node 6 and the respective access networks 20, 36 may be by means of non-wireless access networks, for example Ethernet.

It is noted that no routing through the second subnet 18 is involved in the processes to be described below. However, subnet 18 is included in FIG. 2 for the sake of completeness to emphasise a difference between the processes to be described below, in which handover between different access networks is implemented without needing to change the subnet, and those prior art processes described in the introduction above where handover between different access networks required a change of subnet.

The embodiments to be described below may be implemented by configuring or adapting any suitable apparatus, for example a computer or other processing apparatus, forming part or all of any one or more the above mentioned network entities or other system components. Alternatively, a processor implementing processor-implementable instructions and/or stored on a suitable storage medium, such as computer memory, hard disk, floppy disk, ROM, PROM etc, may implement the processes described. The processor may be a computer, a network of computers, or one or more dedicated processors.

More particularly, in the case of those processes to be described which may be performed by the mobile node 6, these may be implemented by a processor 48 of the mobile node 6, in association with a memory 50. It is also noted that the memory 50 may contain a routing table 52, which in some embodiments may be updated under control of the processor 48, as will be described in more detail below.

It is next convenient to describe certain different types of Network Access Point (NAP), before then describing how the invention may be embodied for any kind of NAP in two types of Internet protocol (IP) contexts, namely IPv4 and IPv6 context.

The Network Access Point (NAP) is an entity located in a network A, which allows some hosts, which are not physically attached to A, to communicate with hosts of A through a network B. Let us consider a case where network A is an IP subnet that runs the IP protocol suite over a certain link-level technology and supports an address resolution mechanism. Network B should allow a host, attached to it and willing to access A, to send its IP packets to the NAP. Such a 'remote' host (RH) (that may be a mobile host) will use an IP address of the IP subnet A (i.e. same prefix); the way this address is obtained (statically assigned, dynamically assigned through DHCP, etc.) is well known to the skilled person, and is for example well documented in the IP specifications and does not need to be explained further here in order to understand the present invention.

Basically there exist different types of NAP depending on technologies of networks A and B:

### 1) The NAP is a BRIDGE.

In this case network A and B are interconnected at the link-level via the bridge (or NAP) which forwards any incoming link-level frames from a network to the other when appropriate. A bridge has no IP stack and is completely transparent to the IP layer; the two networks (or segments) interconnected are part of the same IP subnet.

There exist different kinds of bridge (transparent bridge, source-routed bridge...), and they are usually used to interconnect two networks of the same technology. Even if there are some cases where two networks with different technologies (e.g. IEEE 802.3 and IEEE 802.5) can be interconnected via a bridge, this is often difficult (need to map services, link-level frames etc.) and most of the time impossible. The main reason is that bridging requires that the two link-level protocols support the same addressing format, which is obviously almost never the case.

However, when bridging is possible, it has the great advantage to make the interconnection of the two networks completely transparent at the IP level including the address resolution mechanism (ARP for IPv4 or ND for IPv6). This means that address resolution and transmission of IP packets within this subnet (made of two interconnected segments) will be handled in exactly the same way as if there was a single segment (or single link-level technology).

### 2) The NAP is NOT a BRIDGE.

In that case, interconnection cannot be achieved at the link-level and should be supported at the IP level by the NAP. An example of such a NAP is a Remote Access Server (or dial-up server). The remote host configured with an IP address of network A accesses it through the NAP via network B. The NAP should support two main functions to make this interconnection transparent to any host of A (i.e. for hosts within A, RH is seen as any other host of A); it should take part to Address Resolution and IP packets forwarding:
a) Within network A, NAP should act as a representative of any remote host accessing A through it so that any IP packet addressed to the remote host is redirected transparently toward the NAP. For that purpose, the NAP will act as an Address Resolution proxy for any remote host connected through it (as described in the following references: RFC-826, "An Ethernet Address Resolution Protocol or Converting Network Protocol Addresses to 48-bit Ethernet Addresses for Transmission on Ethernet Hardware", D. Plummer, November 1982; and RFC2461, "Neighbor Discovery for IP Version 6 (IPv6), T. Narten, E. Nordmark, W. Simpson, December 1998). The NAP will answer address resolution requests on behalf of that RH responding with the NAP own link-level address. This makes any node in network A sending an IP packet to RH to encapsulate them in a link-level frame addressed to the link-level address of the NAP.
b) The NAP should also include support for forwarding IP packets (IP forwarding) between the remote host and network A. This includes packets received by the NAP and addressed to the remote host as well as packet sent by the remote host addressed to any host within A (or even within the Internet if A is attached to it). Even if there may be some cases where this NAP is also transparent for the remote host it is generally not the case (e.g., remote access/dial-up servers) (as described in the following references: RFC-1027, "Using ARP to implement transparent subnet gateways", S. Carl-Mitchell, J. S. Quaterman, October 1987; and RFC-925, "Multi-LAN Address Resolution", J. Postel, October 1984).

Only the embodiments in which at least one NAP is a BRIDGE are covered by the invention; that is, wherein at least on of the ending provision step and starting provision step is performed by the mobile node.

Returning to FIG. 2, recall that duplex data flow (here IP packets) is currently taking place between the application server 2/Internet 4 and the mobile node 6 via the first access network 20. In more detail, this includes the data flow passing through the mobile node level interface 32, which here is implemented as having the address MN_LL@1, where MM_LL@1 means Link Layer Address of the mobile node's (hence MN) network interface #1, where #1 refers to first access network).

As for the other interfaces, these will depend on the details of each system, but one possibility for example is that the link layer address of the first interface 22 of the NAP 24 is NAP1_LL@1; the address of the second interface 26 of NAP 24 is NAP1_LL@2; the address of mobile node's link level interface 46, when later switched via the second access network 36, is MN_LL@2; the address of the first interface 38 of NAP 40 is NAP2_LL@1; and the address of the second interface 42 of NAP 40 is NAP2 LL@2.

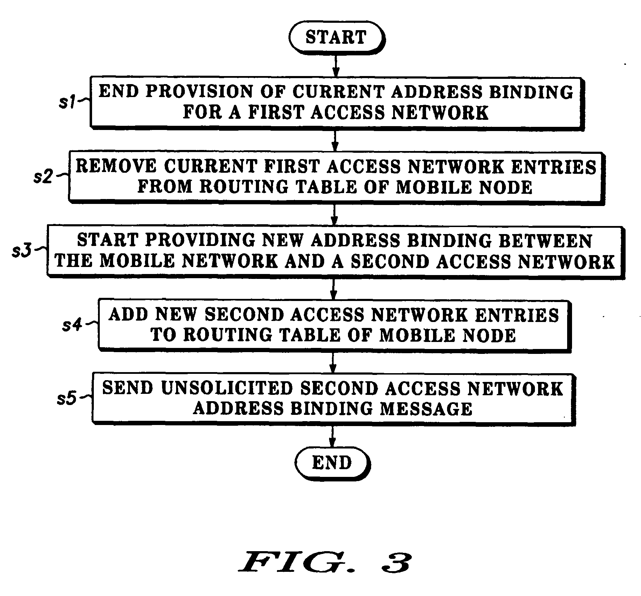

FIG. 3 shows process steps of a generalised embodiment that may be applied with any type of NAP and in different IP contexts, e.g. either or both IPv4 and IPv6 contexts. (Later below the way in which the various steps of FIG. 3 may be implemented, by way of example, in some particular NAP/IP contexts will be explained).

(Note, the term "address binding", as used below, refers to the binding (resulting from the address resolution process, ARP or ND) between the Mobile Node's IP address and the link layer address through which the IP data flow is flowing (depending whether the NAP is a bridge or not this link layer address may be the one of the mobile node (MN_LL@) or the one of the NAP (NAP_LL@) respectively). Thus, this binding is between the mobile node and the access network.

At step s1, provision of the address binding currently being provided between the mobile node 6 and the first access network 20 is ended. In these IP embodiments, this is implemented by terminating publishing of the Address Binding between the mobile node's IP address and the corresponding link-level address for the first access network (depending of the type of this NAP, i.e. a bridge or not a bridge, this may be MN_LL@1 or NAP1 LL@1 respectively).

In the current situation shown in FIG. 2, entries in the routing table 52 of mobile node facilitate routing of the data flow from the mobile node 6 to the first subnet 16 via the first access network 20, including specification of the mobile node's first interface 32 identifier (MN_IID_1).

At step s2, these entries are removed from the routing table 52.

At step s3, provision of a new address binding, this time between the mobile node 6 and the second access network 36, is started.

In these IP embodiments, this is implemented by starting publishing of the Address Binding between the mobile node's IP address and the corresponding link-level address for the second access network 36 (depending on the type of this NAP, i.e. a bridge or not a bridge, this may be MN_LL@2 or NAP2 LL®1 respectively).

At step s4, new entries, that will route the data flow from the mobile node 6 to the first subnet 16 via the second access network 36, are added to the routing table 52, including specification of the mobile node's second interface 46 identifier (MN_IID_2).

At step s5, an unsolicited address binding message, specifying the second access network 36, is sent to the first subnet 16. In these IP embodiments, this is implemented by sending an unsolicited Address Binding between the mobile node's IP address and the corresponding link-level address for the second access network 36 (depending of the type of this NAP, i.e. a bridge or not a bridge, this may be MN_LL@2 or NAP2 LL@1 respectively) to immediately update the binding caches of any host in the first subnet 16.

It is noted that step s5 is merely a preferred option, and therefore in other embodiments only steps s1 to s4 are performed (the advantages of including optional step s5 are explained later below).

When all five steps s1 to s5 (or steps s1 to s4 if optional step s5 is not included) as described above are implemented, the process is able to re-route duplex data flow, i.e. data flow in the direction from the first subnet 16 to the mobile node 6 as well as in the direction from the mobile node 6 to the first subnet 16. However, when re-routing of data flow in only one of these directions is to be implemented, simpler embodiments may be implemented. In particular, in the case of embodiments for re-routing of data flow in the direction of the first subnet 16 to the mobile node 6, only steps s1 and s3 (and optionally step s5) are preformed. Similarly, in the case of embodiments for re-routing of data flow in the direction of the mobile node 6 to the first subnet 16, only steps s2 and s4 are performed.

Furthermore, the various steps described above need not be performed in the order they have been described. In the following paragraph, further details of the order in which the steps relating to the respective data flow directions, i.e. steps s1, s3 and s5 as opposed to s2 and s4, may be carried out are described. Later below, various possibilities and preferences for the order in which the steps relating to each of the respective data flow directions, i.e. the order of implementing steps s1, s3 and s5, and separately the order of implementing the steps s2 and s4, will be considered.

Returning to the case of duplex data flow, where steps s1 to s4 (and optionally step s5) are included, it is noted that there is no set requirement as to the relative order in which the steps relating to the respective data flow directions, i.e. steps s1, s3 and s5 as opposed to s2 and s4, are carried out. This separation into two sets (incoming and outgoing IP traffic) means these two possibilities may in fact be used selectively even in a duplex flow situation, as it allows to handover only one direction (incoming or outgoing) of a duplex IP traffic to a new (possibly unidirectional) link while maintaining the other direction on the initial access network.

Further details will now be described of the way in which the various steps of FIG. 3 may be implemented, by way of example, in some particular NAP/IP contexts. In each case, the steps labelled 1), 2), 3), 4) and 5) correspond to steps s1, s2, s3, s4 and s5 respectively, and represent particular ways in which the earlier described steps s1 to s5 may be implemented in the given contexts. Moreover, for each of the scenarios described below, the above observations about single data flow direction embodiments, the optional characteristic of step s5, and the various points about the order in which the different steps may be implemented, apply.

### Particular NAP/IP Contexts

### 1 In the IPv4 context:

Address Resolution Protocol (ARP) is used (as detailed in RFC-826, "An Ethernet Address Resolution Protocol or Converting Network Protocol Addresses to 48-bit Ethernet Addresses for Transmission on Ethernet Hardware", D. Plummer, November 1982).

### 1.1 NAP 24 is a bridge; NAP 40 is a bridge:

### 1) MOBILE NODE 6:

Deactivate the ARP protocol on network interface 32 (its link layer address is MN_LL@1).

### 2) MOBILE NODE 6:

Remove entries in routing table that maps route to First subnet 16 (and eventually default route) to network interface 32.

### 3) MOBILE NODE 6:

Activate the ARP protocol on network interface 46 (its link layer address is MN_LL@2).

### 4) MOBILE NODE 6:

Add entries in routing table that maps route to First subnet 16 (and eventually default route) to network interface 46.

### 5) MOBILE NODE 6:

Send an Unsolicited ARP reply message from interface 46 to all hosts in First subnet 16 that contains a binding that maps mobile node's IP address to MN_LL@2.

### 1.2 NAP 24 is a bridge; NAP 40 is not a bridge:

### 1) MOBILE NODE 6:

Deactivate the ARP protocol on network interface 32 (its link layer address is MN_LL@1).

### 2) MOBILE NODE 6:

Remove entries in routing table that maps route to First subnet 16 (and eventually default route) to network interface 32.

### 3) NAP 40:

Start Being a proxy for mobile node in First subnet 16. Start being an ARP proxy for mobile node in First subnet 16. Any ARP request for mobile node's IP address sent in first subnet 16 will be answered by NAP 40 that will send back an ARP reply that maps mobile node's IP address to the link layer address interface 38 (that is NAP2_LL@1). Support bi-directional forwarding of IP packets (IP forwarding) between mobile node and nodes in First subnet 16.

### 4) MOBILE NODE 6:

Add entries in routing table that maps route to First subnet 16 (and eventually default route) to network interface 46.

### 5) NAP 40:

Send an unsolicited ARP reply message from interface 38 to all hosts in First subnet 16 that contain a binding that maps mobile node's IP address to NAP2_LL@1.

### 1.3 NAP 24 is not a bridge; NAP 40 is a bridge:

### 1) NAP 24:

Stop being an ARP proxy for mobile node in First subnet 16. May also terminate IP forwarding support.

### 2) MOBILE NODE 6:

Remove entries in routing table that maps route to First subnet 16 (and eventually default route) to network interface 32.

### 3) MOBILE NODE 6:

Activate the ARP protocol on network interface 46 (its link layer address is MN_LL@2).

### 4) MOBILE NODE 6:

Add entries in routing table that maps route to First subnet 16 (and eventually default route) to network interface 46.

### 5) MOBILE NODE 6:

Send an Unsolicited ARP reply message from interface 46 to all hosts in First subnet 16 that contain a binding that maps mobile node's IP address to MN_LL@2.

### 1.4 NAP 24 is not a bridge; NAP 40 is not a bridge:

### 1) NAP 24:

Stop being an ARP proxy for mobile node in First subnet 16. May also terminate IP forwarding support.

### 2) MOBILE NODE 6:

Remove entries in routing table that maps route to First subnet 16 (and eventually default route) to network interface 32.

### 3) NAP 40:

Start being a proxy for mobile node in First subnet 16. Start being an ARP proxy for mobile node in First subnet 16. Any ARP request for mobile node 's IP address sent in first subnet 16 will be answered by NAP 40 that will send back an ARP reply that maps mobile node's IP address to the link layer address of interface 38 (that is NAP2 LL@1). Support bi-directional forwarding of IP packets (IP forwarding) between mobile node and nodes in First subnet 16.

### 4) MOBILE NODE:

Add entries in routing table that maps route to First subnet 16 (and eventually default route) to network interface RH_LL@2.

### 5) NAP 40:

Send an unsolicited ARP reply message from interface 38 to all hosts in First subnet 16 that contain a binding that maps mobile node's IP address to NAP2_LL@1.

### 2 In the IPv6 context:

Neighbour Discovery (ND) is used (as detailed in RFC2461, "Neighbour Discovery for IP Version 6 (IPv6), T. Narten, E. Nordmark, W. Simpson, December 1998).

### 2.1 NAP 24 is a bridge; NAP 40 is a bridge:

### 1) MOBILE NODE 6:

Deactivate the ND protocol on network interface 32 (its link layer address is MN_LL@1).

### 2) MOBILE NODE 6:

Remove entries in routing table that map route to First subnet 16 (and eventually default route) to network interface 32.

### 3) MOBILE NODE 6:

Activate the ND protocol on network interface 46 (its link layer address is MN_LL@2).

### 4) MOBILE NODE 6:

Add entries in routing table that map route to First subnet 16 (and eventually default route) to network interface 46.

### 5) MOBILE NODE 6:

Send an Unsolicited Neighbour Advertisement message from interface 46 to the all-nodes multicast address in First subnet 16 that contains a binding that maps mobile node's IP address to MN_LL@2. The Override Flag of this Neighbour Advertisement message should be set to 1 in order to make hosts in first subnet 16 immediately install this new binding in their caches.

### 2.2 NAP 24 is a bridge; NAP 40 is not a bridge:

### 1) MOBILE NODE 6:

Deactivate the ND protocol on network interface 32 (its link layer address is MN_LL@1).

### 2) MOBILE NODE 6:

Remove entries in routing table that maps route to First subnet 16 (and eventually default route) to network interface 32.

### 3) NAP 40:

Start being a proxy for mobile node in First subnet 16: Start being a ND proxy for mobile node in First subnet 16. Any Neighbour Solicitation message for mobile node's IP address sent in first subnet 16 will be answered by NAP 40 that will send back a (solicited) Neighbour Advertisement message that maps mobile node 's IP address to the link layer address of interface 38 (that is NAP2 LL@1). Support bi-directional forwarding of IP packets (IP forwarding) between mobile node and nodes in First subnet 16.

### 4) MOBILE NODE 6:

Add entries in routing table that map route to First subnet 16 (and eventually default route) to network interface 46.

### 5) NAP 40:

Send an Unsolicited Neighbour Advertisement message from interface 38 to the all-nodes multicast address in First subnet 16 that contains a binding that maps mobile node's IP address to NAP2_LL@1. The Override Flag of this Neighbour Advertisement message should be set to 1 in order to make hosts in the first subnet 16 to immediately install this new binding in their caches.

### 2.3 NAP 24 is not a bridge; NAP 40 is a bridge:

### 1) NAP 24:

Stop Being a ND proxy for mobile node in First subnet 16. May also terminate IP forwarding support.

### 2) MOBILE NODE 6:

Remove entries in routing table that maps route to First subnet 16 (and eventually default route) to network interface 32 (its link layer address is MN_LL@1).

### 3) MOBILE NODE 6:

Activate the ND protocol on network interface 46 (its link layer address is MN_LL@2).

### 4) MOBILE NODE 6:

Add entries in routing table that maps route to First subnet 16 (and eventually default route) to network interface 46.

### 5) MOBILE NODE 6:

Send an Unsolicited Neighbour Advertisement message to the all-nodes multicast address in First subnet 16 that contains a binding that maps mobile node's IP address to MN_LL@2. The Override Flag of this Neighbour Advertisement message should be set to 1 in order to make hosts in first subnet 16 to immediately install this new binding in their caches.

### 2.4 NAP 24 is not a bridge; NAP 40 is not a bridge:

### 1) NAP 24:

Stop being a ND proxy for mobile node in First subnet 16. May also terminate IP forwarding support.

### 2) MOBILE NODE 6:

Remove entries in routing table that maps route to First subnet 16 (and eventually default route) to network interface 32.

### 3) NAP 40:

Start being a proxy for mobile node in First subnet 16: Start being a ND proxy for mobile node in first subnet 16. Any Neighbour Solicitation message for mobile node's IP address sent in first subnet 16 will be answered by NAP 40 that will send back a (solicited) Neighbour Advertisement message that maps mobile node 's IP address to the link layer address of interface 38 (that is NAP2 LL@1). Support bi-directional forwarding of IP packets (IP forwarding) between mobile node and nodes in First subnet 16.

### 4) MOBILE NODE 6:

Add entries in routing table that maps route to First subnet 16 (and eventually default route) to network interface 46.

### 5) NAP 40:

Send an Unsolicited Neighbour Advertisement message from interface 38 to the all-nodes multicast address in First subnet 16 that contains a binding that maps mobile node's IP address to NAP2_LL@1. The Override Flag of this Neighbour Advertisement message should be set to 1 in order to make hosts in first subnet 16 to immediately install this new binding in their caches.

A further embodiment will now be described. In the IPv6 context, Neighbour Discovery supports a feature called the Override Flag of the Neighbour Advertisement message. This may be used to implement (or "replace") steps s1 and s3, or more particularly, in the IPv6 context, the following steps:
a) Activate/Deactivate the ND protocol on mobile node's network interface, and
b) Start/Stop being a ND proxy for mobile node in first subnet 16.

This consists of setting the Override Flag to 1 only in Neighbour Advertisements (for mobile node's IP address) issued by the link-level interface of mobile node (or the NAP in case it is ND proxy for mobile node) that has been elected to support the IP traffic. In this case, ND may remain active simultaneously on several interfaces of mobile node (and multiple active ND proxies for mobile node 's IP address may exist simultaneously) as far as only one among them emits Neighbour Advertisements with the Override Flag set to 1. The others emit Neighbour Advertisements with the Override Flag set to 0.

Thus, with IPv6 there are effectively two possible implementations of ending provision of the first address binding and starting provision of the second address binding:

### (i) 1^{st} implementation:

As with the ARP protocol for IPv4, use the Neighbour Discovery protocol (ND) of IPv6 by deactivating the ND protocol on the current interface claiming for the IP address of the mobile node (either an interface from MN or NAP in case this one is not a bridge) and activating the ND protocol on the new interface (either an interface from MN or NAP in case this one is not a bridge) to claim the IP address of the mobile node.

### (ii) 2nd implementation:

Use the Override flag feature provided by the Neighbour Advertisement messages of the ND protocol by Activating setting of the Override Flag (to 0) in subsequent Neighbour Advertisements (for mobile node's IP address). This to be issued from now on by the (current) interface that receives the data flows (either an interface from MN, or NAP in case this one is not a bridge and acts as ND proxy for the mobile node). And activating setting of the Override Flag (to 1) in subsequent Neighbour Advertisements (for mobile node's IP address) to be issued from now on by the new selected interface, to receive the data flows (either an interface from MN, or NAP in case this one is not a bridge and acts as ND proxy for the mobile node). Note that if handover speed optimisation is required, this does not preclude from sending the unsolicited address binding messages (for the new interface/access network), with the override flag set to 1. In addition sending only the unsolicited binding message with the override flag set (to 1) is not sufficient to get rid of the steps activation/deactivation of the setting of the override flag (to 0 or 1) in the subsequent Neighbour Advertisement messages to be issued by the (old and new) interfaces.

As explained above in the various particular NAP/IP contexts, when mobile node handovers its IP traffic to the second access network 36 where NAP 40 is not a bridge, NAP 40 has then to become a proxy for mobile node. NAP 40 may be informed of that through indirect signalling from mobile node to NAP 40; this is for instance the case when the NAP is a PPP server configured to support IP-forwarding and automatically become an Address Resolution proxy for any mobile node establishing a connection to it. If such indirect signalling is not possible, any direct signalling protocol between mobile node and NAP may be used to inform NAP to become a proxy for mobile node.

In the above embodiments, executing step s1 before step s3 will guarantee that, while handing over between the two access networks, no transient entry for mobile node's IP address will appear in binding caches of hosts in the First subnet 16. Other embodiments may be implemented in which this order is not respected but, in that case, one should take care to reduce a much as possible the time elapsing between the steps to minimise the probability of transient entries in the caches. Such an approach may be adopted for optimisation reasons. This may be the case for instance when handing over from a 802.11b access network to a dial-up (PPP) connection over GSM in the case the PPP server (at the NAP) is configured to automatically act as a proxy and send an unsolicited binding as soon as the connection is established.

Indeed, as the establishment of the PPP connection may take several seconds, it can be preferable to wait until the connection is established before deactivating address resolution mechanism on the 802.11b interface so that the number of packets lost while establishing the connection is reduced. As soon as the connection is established (and the NAP becomes a proxy for mobile node) mobile node may deactivate the address resolution mechanism on the 802.11b interface so that the probability of transient entries for mobile node's IP address in the caches is reduced.

Further advantageous orders in which to implement the different steps are as follows.

When step s5 is included, this tends to speed up handover, particularly when it is performed after step s1. However, there is still a possibility handover will be speeded up even when step s5 is performed before step s1.

It is preferable to perform step s1 before step s3 because this will tend to guarantee that, while handing over between two access networks, no transient entry for the mobile node's IP address will appear in binding caches of nodes in the IP subnet. This will usually result on average in a faster handover.

It is preferable to implement step s4 before step s2 as this will tend to prevent loss of outgoing packets (sent by the mobile node) during the handover. It may also speed up handover of outgoing packets (depending on the implementation of the routing table).

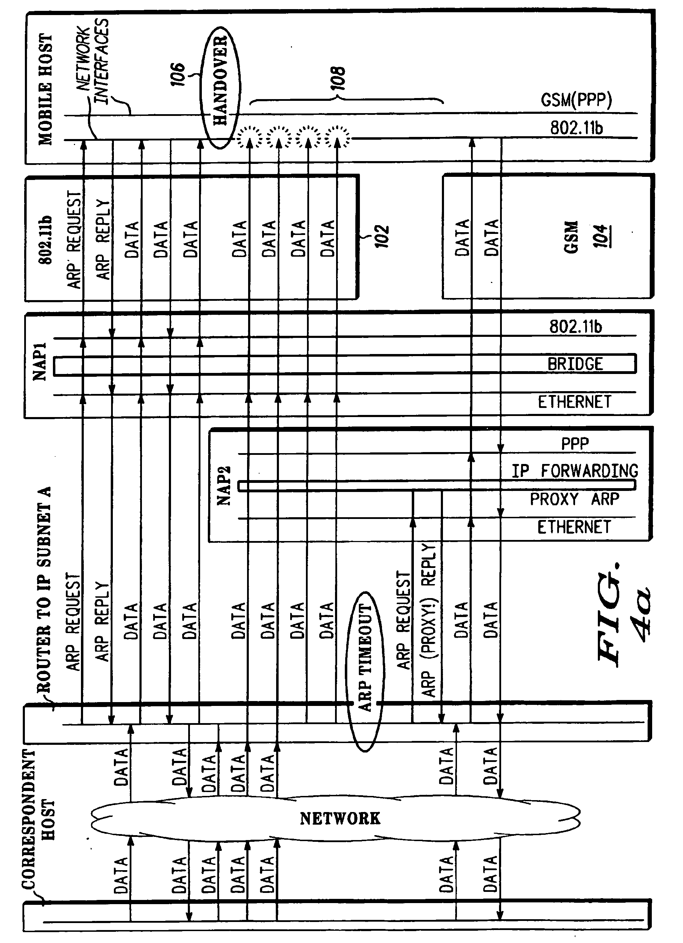

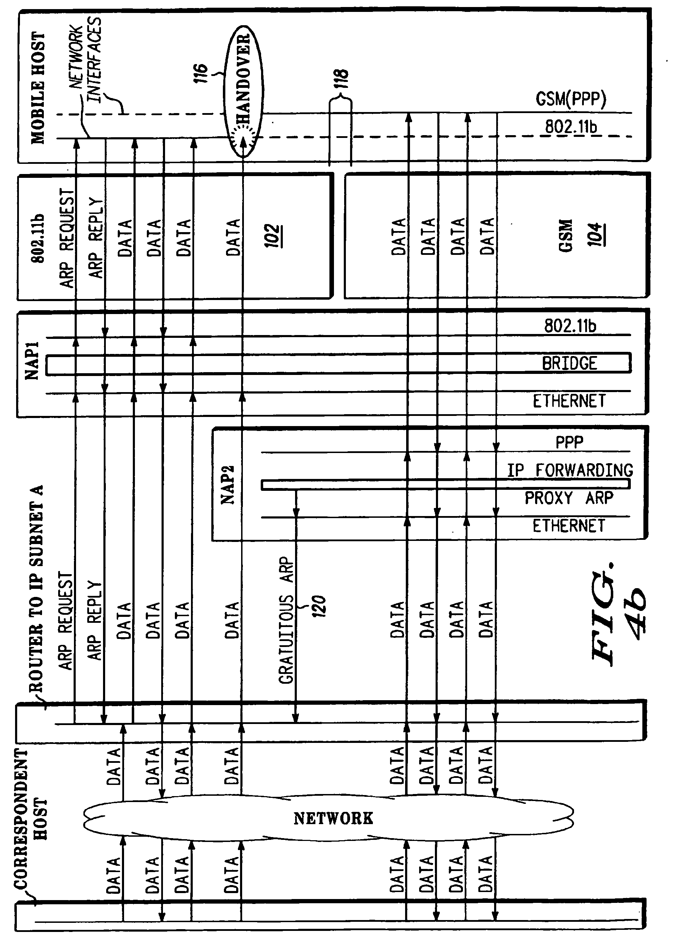

As explained earlier above, step s5 is optional. The following describes the effect and potential advantages of including this optional step, by way of a specific example with reference to FIGS. 4a and 4b.

The unsolicited (or gratuitous) address bindings speed up handover and thus reduce or minimise the loss of IP packets during a handover. For illustration purpose, FIGS. 4a and 4b each show the case of a mobile node (i.e. mobile host) handing over its IP traffic from an 802.11b access network 102 (first access network) to a PPP/GSM dial-up connection 104 (second access network).

The address resolution mechanism used here is ARP (IPv4 context). In this example, the "backbone" of an IP subnet A is Ethernet, the first NAP (NAP1) is a bridge (between Ethernet and 802.11b) and the second NAP (NAP2) is a PPP server (configured with ARP proxy and IP-forwarding). In this scenario, let us consider that the mobile node decides to handover because it is going out of 802.11b coverage.

FIG. 4a shows the case where step s5 is not implemented. In this case, when handover 106 is initiated, steps s1, s2 and s4 are all carried out by the mobile host. Step s3 is carried out by NAP2 in this example, at successful completion of the PPP connection between the mobile node and NAP2. Steps s1, s2, s3 and s4 are all carried out at the point of handover 106 indicated in FIG. 4a. The processes result in eventual service via the PPP/GSM dial-up connection 104 after a time interval 108 as indicated in FIG. 4a.

FIG. 4b however shows the case where step s5 is implemented, as a gratuitous (i.e. unsolicited) ARP message 120 from the second NAP (NAP2) as shown in FIG. 4b. Again steps s1, s2 and s4 are implemented by the mobile node and step 3 in addition to s5 are performed by the second NAP (NAP2), all at the point of handover 116 indicated in FIG. 4b. Eventual service via the PPP/GSM dial-up connection 104 occurs here after a time interval 118. Comparison of the time interval 118 in FIG. 4b with the time interval 108 in FIG. 4a shows how the new route is implemented much quicker due to inclusion of the gratuitous ARP message 120 (i.e. step s5) in the FIG. 4b example.

Further embodiments cover the particular case of a mobile terminal with multiple network interfaces configured with the same IP address but activating only one of them at a time to perform handover, since:
(i) deactivating a network interface that was used to receive and/or send IP packets necessarily includes step s1 and/or step s2.
(ii) activating a network interface to be used to receive and/or send IP packets necessarily includes step s3 and step 4.

In the above embodiments the first access network 24 and second access network 36 may each be of any suitable type, for example such as the following: UMTS, HIPERLAN, Bluetooth, 802.11b, etc.

It is to be appreciated that the arrangement and specific details of interfaces, address types, routers etc. in the above embodiments are merely examples, and the invention is not limited to these examples. The invention may be applied to other aspects of the Internet or other types of protocols and subnets thereof. Furthermore, the invention may also be applied to networks other than the Internet, when such networks have subnets and access networks corresponding to those described above for the case of the Internet.

The invention, or at least embodiments thereof, tend to provide the following advantages, singly or in combination.
(i) It is transparent to user applications. Any existing and future networking applications may benefit; there is no requirement of any kind on them.
(ii) It is transparent to transport protocols (TCP, UDP, and SCTP etc.) or any other protocol operating over IP. Any application using such protocols may benefit transparently from the process.
(iii) It is transparent to any correspondent hosts or routers in the Internet. The handover of the Internet sessions of a mobile host between different access networks, as explained in the invention, does not require any modification of the correspondent hosts and Internet routers neither requires support of extra-functions of any kind on those hosts.
(iv) It does not require any new entity in the Internet.
(v) It does not require modification of any protocol (IP stack protocols, link-level protocols...) and does not require addition of extra-functions in them neither creation of new protocols.
(vi) It is scalable. Embodiments can be deployed to any host (mobile or not) in the Internet without any scalability issues.
(vii) It is applicable for any kind of link-level technology and is suitable for unidirectional links. The invention relies on standardised address resolution mechanism such as ARP for IPv4 and ND for IPv6. The mechanisms (ARP or ND) apply to all link types. However, because they use link-layer multicast for some of their services, it is possible that on some links types (e.g., NBMA links) alternative protocols or mechanisms to implement those services will be specified (in the appropriate document covering the operation of IP over a particular link type). In that case, the invention may be implemented taking into account those constraints.
(viii) It tends to be very easily implemented. As long as the NAP includes all necessary support (bridging or IP-forwarding plus proxying), implementing the invention requires development only on the terminal (RH). Moreover, such an implementation only requires access to a small set of basic functions (configure network interface, write routing table) of the networking API of the terminal's operating system. These functions are part of the standard networking API of any operating system that makes possible to implement this invention on any OS. Moreover, the invention can be fully implemented in the user space of the OS and does not require any modification of the kernel.
(ix) It is adapted for integration with automatic network selection mechanisms. As embodiments of the invention allow maintaining active link-level connectivity with multiple access networks, it eases integration with functions (e.g., network monitoring) required by automatic network selection mechanisms.
(x) It tends to minimise, as much as possible, the loss of IP packets due to handover. Unsolicited address bindings are used to immediately update the binding caches of nodes in the IP subnet (see FIG. 4b).
(xi) Internet communications (i.e. flows of IP packets) may be seamlessly handed over between heterogeneous access networks within a single IP subnet.
(xii) If desired, multiple active network interfaces may be maintained and configured with the same IP address (i.e. active link-level connectivity for any access networks) without disrupting the path followed by the flow of IP packets (i.e. without introduction of transient entries in the Address Resolution caches of other hosts in the IP subnet).
(xiii) This invention tends to be usable irrespective of the technologies of the access networks considered in the handover. The technologies of the two access networks may be the same or different.
(xiv) This invention tends to be compatible with Mobile IP. It may be used in coordination with Mobile IP to provide seamless handover of a user's Internet session between different access networks (of the same or different technologies) irrespective of the IP subnets the two access networks are attached to:
(xv) If they are in different IP subnets then Mobile IP is used to perform the handover.
(xvi) If they are in the same IP subnet then our invention is used.

Whilst the specific and preferred implementations of the embodiments of the present invention are described above, it is clear that one skilled in the art could readily apply variations and modifications of such inventive concepts.

## Claims

1. A method of re-routing data flow from a subnet (16) of a data network (4) to a mobile node (6) having at least two network interfaces;
comprising:
ending provision of a first address binding currently being provided between the mobile node (6) and a first access network (20), wherein an address binding is a binding between a data network protocol address of a mobile node and a link layer address through which the data flow is flowing, wherein the data flow is currently being routed from the data network subnet (16) to the mobile node (6) via the first access network (20) and a first network interface; and
starting provision of a second address binding between the mobile node (6) and a second access network (36) via a second network interface, wherein at least one of the ending provision step and starting provision step is performed by the mobile node (6).

2. A method of re-routing duplex data flow between a subnet (16) of a data network (4) and a mobile node (6) ; comprising:
the method of re-routing data flow from a subnet (16) of a data network (4) to a mobile node (6) as recited in claim 1;
removing first entries, that currently route data flow from the mobile node (6) to the data network subnet (16) via the first access network (20), from a routing table (52) of the mobile node (6); and
adding second entries that route the data flow from the mobile node (6) to the data network subnet (16) via the second access network (36), to the routing table (52) of the mobile node (6).

3. A method according to claim 1 or 2, further comprising:
sending an unsolicited address binding message, specifying the second access network (36), to the data network subnet (16).

4. A method according to any of claims 1, 2 or 3, wherein the step of ending provision of the first address binding is performed before the step of starting provision of the second address binding.

5. A method according to claim 3 or 4, wherein the step of ending provision of the first address binding is performed before the step of sending the unsolicited address binding message.

6. A method according to claim 4 or 5, wherein the step of ending provision of the first address binding is performed before the step of starting provision of the second address binding, and the step of starting provision of the second address binding is performed before the step of sending the unsolicited address binding message.

7. A method according to any of claims 2, or 3, or claims 5 or 6 when dependent from claims 2, or 3, wherein the step of adding the second entries to the routing table (52) of the mobile node (6) is performed before the step of removing the first entries from the routing table (52) of the mobile node (6).

8. A method according to any preceding claim, wherein the data network subnet (16) is an Internet protocol, IP, subnet.

9. A method according to claim 8, wherein the IP subnet uses the IPv4 version of the Internet protocol.

10. A method according to claim 8, wherein the IP subnet uses the IPv6 version of the Internet protocol.

11. A method according to any of claims 8, 9 or 10, wherein the data network (4) is the Internet.

12. A method according to claim 10 or claim 11 when dependent from claim 3, wherein the steps of ending provision of the first address binding and starting provision of the second address binding are implemented by an appropriate setting of the override flag in the subsequent address binding messages to be issued for the first and second access network.

13. A storage medium storing processor-implementable instructions for controlling a processor, in a mobile node (6) comprising at least two network interfaces, to carry out the method of any of claims 1 to 12.

14. A mobile node (6) for communicating with a subnet (16) of a data network (4), the mobile node (6) comprising at least two network interfaces and being adapted to perform the method of any of claims 1 to 12.

15. A communication system comprising a mobile node (6) according to claim 14 and a data network (4) having a subnet (16), wherein data flow is routed between the data network (4) and the mobile node (6).

## Patentansprüche

1. Verfahren zum erneuten Routen bzw. Leiten eines Datenflusses von einem Teilnetzwerk (16) eines Datennetzwerks (4) an einen Mobilknoten (6), welcher mindestens zwei Netzwerkschnittstellen aufweist;
wobei das Verfahren Folgendes umfasst:
Beenden der Bereitstellung einer ersten Adressbindung, die gegenwärtig zwischen dem Mobilknoten (6) und einem ersten Zugriffsnetzwerk (20) besteht, wobei eine Adressbindung eine Bindung zwischen einer Datennetzwerkprotokolladresse eines Mobilknotens und einer Verbindungsschichtadresse ist, durch die der Datenfluss fließt, wobei der Datenfluss gegenwärtig von dem Datennetzwerk-Teilnetz (16) über das erste Zugriffsnetzwerk (20) und eine erste Netzwerkschnittstelle zu dem Mobilknoten (6) geroutet wird; und
Beginn der Bereitstellung einer zweiten Adressbindung zwischen dem Mobilknoten (6) und einem zweiten Zugriffsnetzwerk (36) über eine zweite Netzwerkschnittstelle, wobei mindestens einer der Schritte des Beendens der Bereitstellung und der eine Schritt des Beginns der Bereitstellung von dem Mobilknoten (6) durchgeführt wird.

2. Verfahren zum erneuten Routen eines Duplex-Datenflusses zwischen einem Teilnetzwerk (16) eines Datennetzwerks (4) und einem Mobilknoten (6);
wobei das Verfahren Folgendes umfasst:
das Verfahren zum erneuten Routen des doppelten Datenflusses von einem Teilnetz (16) eines Datennetzwerks (4) zu einem Mobilknoten (6), wie in Anspruch 1 dargelegt;
Entfernen erster Einträge, die gegenwärtig den Datenfluss von dem Mobilknoten (6) über das erste Zugriffsnetzwerk (20) zu dem Datennetzwerk-Teilnetz (16) routen, aus einer Routing-Tabelle (52) des Mobilknotens (6); und
Hinzufügen zweiter Einträge, die den Datenfluss von dem Mobilknoten (6) über das zweite Zugriffsnetzwerk (36) zu dem Datennetzwerk-Teilnetz (16) routen, zu der Routing-Tabelle (52) des Mobilknotens (6).

3. Verfahren nach einem der Ansprüche 1 oder 2, welches des Weiteren Folgendes aufweist:
Senden einer unangeforderten Adressbindungsnachricht, die das zweite Zugriffsnetzwerk (36) spezifiziert, an das Datennetzwerk-Teilnetz (16).

4. Verfahren nach einem der Ansprüche 1, 2 oder 3, **dadurch gekennzeichnet, dass** der Schritt des Beendens der Bereitstellung der ersten Adressbindung vor dem Schritt des Beginns der Bereitstellung der zweiten Adressbindung durchgeführt wird.

5. Verfahren nach einem der Ansprüche 3 oder 4, **dadurch gekennzeichnet, dass** der Schritt des Beendens der Bereitstellung der ersten Adressbindung vor dem Schritt des Sendens der unangeforderten Adressbindungsnachricht durchgeführt wird.

6. Verfahren nach einem der Ansprüche 4 oder 5, **dadurch gekennzeichnet, dass** der Schritt des Beendens der Bereitstellung der ersten Adressbindung vor dem Schritt des Beginns der Bereitstellung der zweiten Adressbindung, und der Schritt des Beginns der Bereitstellung der zweiten Adressbindung vor dem Schritt des Sendens der unangeforderten Adressbindungsnachricht durchgeführt wird.

7. Verfahren nach einem der Ansprüche 2 oder 3, oder der Ansprüche 5 oder 6, wenn diese von den Ansprüchen 2 oder 3 abhängen, **dadurch gekennzeichnet, dass** der Schritt des Hinzufügens der zweiten Einträge zu der Routing-Tabelle (52) des Mobilknotens (6) vor dem Schritt des Entfernens der ersten Einträge aus der Routing-Tabelle (52) des Mobilknotens (6) durchgeführt wird.

8. Verfahren nach einem der vorhergehenden Ansprüche, **dadurch gekennzeichnet, dass** das Datennetzwerk-Teilnetz (16) ein Internetprotokoll- bzw. IP-Teilnetz ist.

9. Verfahren nach Anspruch 8, **dadurch gekennzeichnet, dass** das IP-Teilnetz die IPv4-Version des Internetprotokolls verwendet.

10. Verfahren nach Anspruch 8, **dadurch gekennzeichnet, dass** das IP-Teilnetz eine IPv6-Version des Internetprotokolls verwendet.

11. Verfahren nach einem der Ansprüche 8, 9 oder 10, **dadurch gekennzeichnet, dass** das Datennetzwerk (4) das Internet ist.

12. Verfahren nach Anspruch 10 oder nach Anspruch 11, wenn dieser von Anspruch 3 abhängt, **dadurch gekennzeichnet, dass** die Schritte des Beendens der Bereitstellung der ersten Adressbindung und des Beginns der Bereitstellung der zweiten Adressbindung durch eine geeignete Einstellung des Überbrückungs- bzw. Override-Flags in den nachfolgenden Adressbindungsnachrichten, die für das erste und zweite Zugriffsnetzwerk ausgegeben werden sollen, implementiert sind.

13. Speichervorrichtung, die prozessoranwendbare Anweisungen zur Steuerung eines Prozessors, der in einem Mobilknoten (6), der mindestens zwei Netzwerkschnittstellen aufweist, zur Durchführung des Verfahrens nach einem der Ansprüche 1 bis 12 speichert.

14. Mobiler Knoten (6) zur Kommunikation mit einem Teilnetz (16) eines Datennetzwerks (4), wobei der Mobilknoten (6) mindestens zwei Netzwerkschnittstellen aufweist und derart ausgelegt ist, dass er das Verfahren nach einem der Ansprüche 1 bis 12 durchführt.

15. Kommunikationssystem, welches einen Mobilknoten (6) nach Anspruch 14 und ein Datennetzwerk (4) mit einem Teilnetz (16) aufweist, **dadurch gekennzeichnet, dass** der Datenfluss zwischen dem Datennetzwerk (4) und dem Mobilknoten (6) geroutet wird.

## Revendications

1. Procédé de reroutage d'un flot de données depuis un sous-réseau (16) d'un réseau de données (4) vers un noeud mobile (6) ayant au moins deux interfaces réseau;
comprenant:
la fin de la fourniture d'une première liaison d'adresse qui est actuellement fournie entre le noeud mobile (6) et un premier réseau d'accès (20), où une liaison d'adresse est une liaison entre une adresse de protocole de réseau de données d'un noeud mobile et une adresse de couche de liaison à travers laquelle le flot de données circule, où le flot de données est actuellement routé depuis le sous-réseau du réseau de données (16) vers le noeud mobile (6) via le premier réseau d'accès (20) et une première interface réseau; et
le commencement de la fourniture d'une seconde liaison d'adresse entre le noeud mobile (6) et un second réseau d'accès (36) via une seconde interface réseau, où au moins l'une parmi l'étape de fin de fourniture et l'étape de commencement de fourniture est effectuée par le noeud mobile (6).

2. Procédé de reroutage d'un flot de données en duplex entre un sous-réseau (16) d'un réseau de données (4) et un noeud mobile (6) ;
comprenant:
le procédé de reroutage d'un flot de données depuis un sous-réseau (16) d'un réseau de données (4) vers un noeud mobile (6) selon la revendication 1;
la suppression de premières entrées, qui routent actuellement le flot de données depuis le noeud mobile (6) vers le sous-réseau du réseau de données (16) via le premier réseau d'accès (20), d'une table de routage (52) du noeud mobile (6); et
l'ajout de secondes entrées qui routent le flot de données depuis le noeud mobile (6) vers le sous-réseau du réseau de données (16) via le second réseau d'accès (36), à la table de routage (52) du noeud mobile (6).

3. Procédé selon la revendication 1 ou 2, comprenant en outre:
l'envoi d'un message de liaison d'adresse non sollicité, spécifiant le second réseau d'accès (36), au sous-réseau du réseau de données (16).

4. Procédé selon l'une quelconque des revendications 1, 2 ou 3, dans lequel l'étape de fin de la fourniture de la première liaison d'adresse est effectuée avant l'étape de commencement de la fourniture de la seconde liaison d'adresse.

5. Procédé selon la revendication 3 ou 4, dans lequel l'étape de fin de la fourniture de la première liaison d'adresse est effectuée avant l'étape d'envoi du message de liaison d'adresse non sollicité.

6. Procédé selon la revendication 4 ou 5, dans lequel l'étape de fin de la fourniture de la première liaison d'adresse est effectuée avant l'étape de commencement de la fourniture de la seconde liaison d'adresse, et l'étape de commencement de la fourniture de la seconde liaison d'adresse est effectuée avant l'étape d'envoi du message de liaison d'adresse non sollicité.

7. Procédé selon l'une quelconque des revendications 2 ou 3, ou des revendications 5 ou 6, lorsqu'elles dépendent des revendications 2 ou 3, dans lequel l'étape d'ajout des secondes entrées à la table de routage (52) du noeud mobile (6) est effectuée avant l'étape de suppression des premières entrées de la table de routage (52) du noeud mobile (6).

8. Procédé selon l'une quelconque des revendications précédentes, dans lequel le sous-réseau du réseau de données (16) est un sous-réseau de protocole Internet (IP).

9. Procédé selon la revendication 8, dans lequel le sous-réseau IP utilise la version IPv4 du protocole Internet.

10. Procédé selon la revendication 8, dans lequel le sous-réseau IP utilise la version IPv6 du protocole Internet.

11. Procédé selon l'une quelconque des revendications 8, 9 ou 10, dans lequel le réseau de données (4) est Internet.

12. Procédé selon la revendication 10 ou la revendication 11 lorsqu'elles dépendent de la revendication 3, dans lequel les étapes de fin de la fourniture de la première liaison d'adresse et de commencement de la fourniture de la seconde liaison d'adresse sont mises en oeuvre par un réglage approprié du drapeau d'annulation dans les messages de liaison d'adresse ultérieurs à émettre pour les premier et second réseaux d'accès.

13. Support de stockage stockant des instructions pouvant être mises en oeuvre par un processeur pour commander un processeur, dans un noeud mobile (6) comprenant au moins deux interfaces réseau pour réaliser le procédé selon les revendications 1 à 12.

14. Noeud mobile (6) pour communiquer avec un sous-réseau (16) d'un réseau de données (4), le noeud mobile (6) comprenant au moins deux interfaces réseau et étant adapté pour effectuer le procédé selon l'une quelconque des revendications 1 à 12.

15. Système de communication comprenant un noeud mobile (6) selon la revendication 14 et un réseau de données (4) ayant un sous-réseau (16), dans lequel le flot de données est routé entre le réseau de données (4) et le noeud mobile (6).
